# EUROPEAN PATENT APPLICATION

(11) **EP 1 777 196 A1**
(43) Date of publication of application: **25.04.2007**
(21) Application number: 05758344.5
(22) Date of filing: 07.07.2005
(51) Int. Cl.: C01B 33/037

(54) **METHOD FOR PURIFICATION OF SILICON AND SILICON PURIFIED BY SAID METHOD**

(30) Priority: 13.07.2004 JP 2004205741
(71) Applicant: SHARP KABUSHIKI KAISHA, Osaka-shi, Osaka 545-8522 (JP)
(72) Inventor: FUKUYAMA, Toshiaki, 6310846 (JP); WADA, Kenji, T akarazuka-shi, Hyogo, 6650815 (JP)
(74) Representative: Müller, Frithjof E.
(86) International application number: PCT/JP2005/012565
(87) International publication number: WO 2006/006487

(57) **Abstract**

In order to provide silicon for solar batteries inexpensively by efficient refining and without lowering the refining rate, the present invention is directed to a method for refining molten silicon (8) containing an impurity element. According to one aspect, the method includes the steps of: bringing a refine gas containing a component that reacts with the impurity element into contact with the molten silicon (8), thereby removing a product containing the impurity element from the molten silicon (8); and bringing a process gas, having small reactivity with the molten silicon (8), with the molten silicon (8), thereby removing a product generated by reaction of the molten silicon (8) and the refine gas.

## Description

### Technical Field

The present invention relates to a silicon refining method for manufacturing a silicon raw material for a solar cell.

### Background Art

In light of environmental problems, use of natural energies as an alternative to petroleum and the like has been attracting attention. Among others, solar batteries that employ photoelectric conversion principle of silicon semiconductors have such a feature that conversion of solar energy into electricity can easily be carried out. However, in order for the solar batteries to become widespread, the costs of the solar batteries, in particular, of semiconductor silicon, must be reduced.

As to high-purity silicon for semiconductor integrated circuits, high-purity silicon of about 11N (nines) can be obtained by, using metal silicon of at least 98% purity as a raw material obtained by carbon reduction of silica, synthesizing trichlorosilane (SiHCl) through a chemical method, then purifying it through distillation and thereafter refining the same (Siemens process). However, this high-purity silicon requires a complicated manufacturing plant and greater energy for reduction, and therefore it is inevitably an expensive material.

In order to reduce the costs of solar batteries, in parallel with recycling of high-purity silicon resulting from each step of manufacturing semiconductor integrated circuits, an attempt of metallurgical refinement directly from metal silicon has been made. As to the recycling, when producing a polycrystalline silicon ingot from materials such as silicon wafers and CZ ingot ends (scrap), unidirectional solidification of silicon melt is conducted so that refinement is attained by segregation. Thus, a practical solar cell characteristic is attained. However, while the unidirectional solidification from metal silicon is excellent in simultaneously decreasing many impurity elements, boron is exceptional. Due to its great segregation coefficient of 0.8, principally solidification segregation of boron cannot efficiently be performed. Thus, practical boron decrease has been difficult.

Accordingly, as to removal of boron, a plasma melting process has been disclosed, in which silicon containing boron is placed in a water-cooled copper crucible and the metal silicon is melted by oxidizing plasma, of which operating gas is a mixture gas of argon gas (Ar) and a small amount of O₂ or CO₂ (Kichiya Suzuki and three others, "Gaseous Removal of Phosphorus and Boron from Molten Silicon", Journal of the Japan Institute of Metals, 1990, vol. 54, No. 2, pp.161-167 (see Non-Patent Document 1)). According to this method, as boron in the metal silicon volatilizes as gaseous boron oxide constituted of BO, BO₂ or B₂O₃, the concentration of boron can be lowered.

Also, a method has been disclosed wherein silicon containing boron and a slag of which main component is calcium oxide are melted, and while stirring the molten silicon by a rotary driving mechanism, an oxidizing gas is blown into the molten silicon to remove boron by oxidation (Japanese Patent Laying-Open No. 2003-213345 (see Patent Document 1)). According to the method, silicon of about 6N (nines) purity to be used as solar batteries can efficiently and inexpensively be manufactured.

As the method for decreasing boron by allowing boron to be boron oxide and to be volatilized from molten silicon, there is also a method in which the surface of molten silicon is irradiated with plasma of a mixture gas, which is a gas of Ar or Ar with added hydrogen, containing water vapor and further silica powder, so as to facilitate oxidation of boron (Japanese Patent Laying-Open No. 4-228414 (see Patent Document 2)). According to this method, while boron oxide can be vaporized in high temperatures and can be removed, the portion for plasma reaction is localized because of the structure of the apparatus. Thus, the apparatus is large in size, expensive, and requires long time for refining.

A method has been disclosed, in which an oxidizing gas is blown into molten silicon, and after boron and carbon is removed by oxidation, the blown-in gas is switched to a gas of argon or a mixture gas of argon and hydrogen, to remove oxygen (Japanese Patent Laying-Open No. 10-120412 (Patent Document 3)). It is described that, according to this method, boron and carbon are rendered to be oxides by the oxidizing gas, which is removed by vaporization, and the oxygen increased in the molten silicon is moved into the bubbles of the blown-in argon gas to be removed.
Patent Document 1: Japanese Patent Laying-Open No. 2003-213345
Patent Document 2: Japanese Patent Laying-Open No. 4-228414
Patent Document 3: Japanese Patent Laying-Open No. 10-120412
Non-Patent Document 1: Kichiya Suzuki and three others, "Gaseous Removal of Phosphorus and Boron from Molten Silicon", Journal of the Japan Institute of Metals, 1990, vol. 54, No. 2, pp.161-167

### Disclosure of the Invention

### Problems to be Solved by the Invention

Among silicon refining methods by metallurgical schemes, as described above, there are the method of irradiating the surface of molten silicon with plasma containing an oxidizing gas to so that boron oxide is volatilized from the melt surface and removed, and the method of removing boron by a slag containing a basic component such as calcium oxide and an oxidizing gas. Neither of them is commercially successful because of the cost issue.

With the method disclosed in non-Patent Document 1, such a problem is reported that, by the reaction of the plasma gas containing the oxidizing gas and the molten silicon, a coating film of silica (SiO₂) is formed on the melt surface. In 15 minutes after plasma melting is initiated, about 50% of the melt surface is covered by silica, whereby volatilizing removal of boron oxide from the melt surface is hindered. Thus, boron removal rate is significantly lowered.

The method disclosed in Patent Document 3 is a method wherein an oxidizing gas is blown to the surface of molten silicon by a plasma torch, similarly to the method described in Non-Patent Document 1. Therefore, as described in Non-Patent Document 1, a silica coating film is formed on the surface of the molten silicon, whereby volatilizing removal of the boron oxide from the melt surface is hindered.

The inventors of the present invention has studied the method disclosed in Patent Document 1, in which slag and oxidizing gas are mixed and stirred, and found the following problem. Blowing the oxidizing gas into the molten silicon, silica (SiO₂) produced by the oxidation reaction of silicon is absorbed by the slag. As a result, the viscosity of the slag is increased, the efficiency in mixing the slag, the oxidizing gas and the molten silicon is impaired, and the reaction rate of boron oxidation is lowered. Thus, the boron removal rate is lowered.

The problem to be solved by the present invention is to implement efficient refining without lowering the refining rate to provide an inexpensive silicon for solar batteries.

### Means for Solving the Problems

The present invention is directed to a method for refining molten silicon containing an impurity element. According to one aspect, the method includes the steps of: bringing a refine gas containing a component that reacts with the impurity element into contact with the molten silicon, thereby removing a product containing the impurity element from the molten silicon; and bringing a process gas, having small reactivity with the molten silicon, with the molten silicon, thereby removing a product generated by reaction of the molten silicon and the refine gas.

The present invention is directed to a method for refining molten silicon containing an impurity element. According to another aspect, the method includes the step of: bringing a refine gas containing a component that reacts with the impurity element into contact with the molten silicon, thereby removing a product containing the impurity element from the molten silicon, and simultaneously, bringing a process gas, having small reactivity with the molten silicon, with the molten silicon, thereby removing a product generated by reaction of the molten silicon and the refine gas.

The refine gas preferably includes an oxidizing gas. On the other hand, the process gas preferably includes an inert gas, and more preferably includes a reducing gas. Preferably, to the molten silicon, a refine additive containing an acidic oxide as a main component is added. Silicon of the present invention is refined by such methods.

### Effects of the Invention

According to the present invention, an impurity such as boron can efficiently be removed from molten silicon without lowering the rate of removing the impurity. Further, owing to the simple refining processes, the silicon raw material for solar batteries can be manufactured at low costs.

### Brief Description of the Drawings

Fig. 1 is a conceptual view of an apparatus used in carrying out a refining method of the present invention.
Fig. 2 is a conceptual view of an apparatus used in carrying out a refining method of the present invention.
Fig. 3 represent relationship between cumulative time of blowing-in refine gas and boron concentration in silicon, in each example and a comparative example.
Fig. 4 is a phase diagram of a binary system of SiO₂-CaO.

### Description of the Reference Signs

1 smelting furnace; 2 crucible; 3 electromagnetic induction heating apparatus; 4 gas blow-in tube; 5 stirring portion; 6 gas blow-out port; 7 gas flow channel; 8, 28 molten silicon; 9 molten slag; 10 oxidation resistant material layer; 11 bubbles of refine gas; 25 slag increased in viscosity by absorbing produced silica.

### Best Modes for Carrying Out the Invention

The method for refining silicon according to the present invention includes the steps of: bringing a refine gas containing a component that reacts with the impurity element into contact with the molten silicon, thereby removing a product containing the impurity element from the molten silicon; and bringing a process gas, having small reactivity with the molten silicon, with the molten silicon, thereby removing a product generated by reaction of the molten silicon and the refine gas. With such a refining method, the impurity element in the molten silicon can effectively be removed, and simultaneously, the product that hinders vaporizing removal of the impurity can be removed. Thus, efficient refining of molten silicon is achieved.

The refine gas is a gas containing a component that reacts with an impurity element in the molten silicon, whereas the impurity element is boron, carbon or the like that can be removed from the molten silicon specifically utilizing the oxidation reaction. Preferably, the refine gas is a gas in which carrier gas of Ar contains water vapor. The water vapor can easily be included in the refine gas in a range of about 2 volume % - 70 volume %, by setting the gas dew point to be representatively in a range of 20°C - 90°C using a simple humidifier (vaporizer). Hydrogen may be added to the refine gas as appropriate.

The component to be included in the refine gas to react with the impurity element is not limited to water vapor, and a gas containing oxygen atom such as oxygen and carbon dioxide, for example, can be used. Further, considering oxidation reaction in a broader sense, a halogen-base gas such as hydrogen chloride can similarly be used. Accordingly, as the component to be included in the refine gas to react with the impurity element, an oxidizing gas can preferably be used. For the carrier gas, an inert gas having small reactivity with silicon, such as Ar is particularly preferable, while nitride or the like can also be used.

The product generated by reaction of the molten silicon and the refine gas is, besides a product containing an impurity element such as boron oxide, for example Si0₂ (hereinafter referred to as "produced silica") produced by oxidation of silicon by blowing a refine gas containing water vapor into the molten silicon.

The process gas is a gas having small reactivity with the molten silicon, and for example an inert gas such as Ar or nitride is preferable. Preferably the process gas includes a reducing gas such as hydrogen, in that it efficiently removes silica and the like produced by the oxidation reaction of the molten silicon and refine gas.

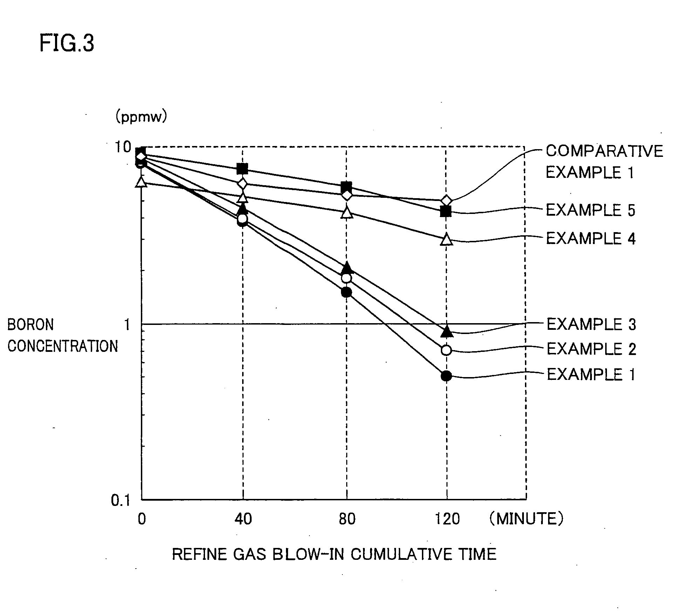

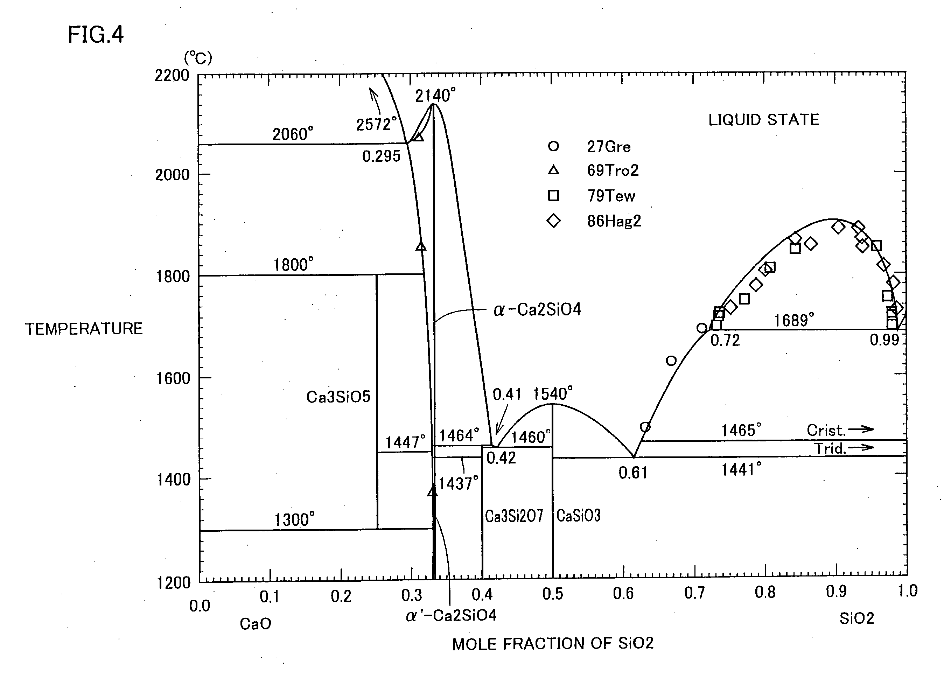

The refine additive is a mixture of silicon oxide (SiO₂) and calcium oxide (CaO), for example. Fig. 4 is a phase diagram of a binary system of SiO₂-CaO. Fig. 4 is found in Advanced Physical Chemistry for Process Metallurgy, 1997, p.109, Fig. 3.7. As shown in Fig. 4, the mixture of silicon oxide and calcium oxide can be brought into a molten state at a temperature of about 1460°C or higher, which is higher than the melting point of silicon of about 1414°C. The refine additive in this molten state is hereinafter referred to as "a molten slag".

The usefulness of silicon oxide powder as an oxidant is for example disclosed in Patent Document 2. Silicon oxide powder is poor in wettability with molten silicon, and cannot be added to molten silicon in a large amount, which sometimes hinders the rate of refining silicon. Using the mixture of silicon oxide and calcium oxide as the refine additive, the wettability with the molten silicon can be improved and therefore the oxidant necessary in refining silicon as a molten slag can be introduced in a large amount.

When using a refine additive constituted of a mixture of silicon oxide and calcium oxide, a refine oxide containing silicon oxide as a main component is preferable, since silicon oxide is useful as an oxidant. However, when a refine additive containing silicon oxide as a main component is used, the molten slag may sometimes adhere to the gas blow-out port to clog the same. Additionally, the molten slag containing silicon oxide as a main component is generally great in viscosity. Therefore, once it is adhered, it is difficult to be peeled off.

Accordingly, in order to effectively prevent clogging of the gas blow-out port, it is preferable to add at least one alkali metal oxide such as lithium oxide or sodium oxide. By adding alkali metal oxide to the refine additive, the viscosity of the molten slag is lowered and adhesion to the gas blow-out port can be prevented.

When adding the alkali metal oxide to the refine additive, while the alkali metal oxide can directly be added, it must be handled carefully as the alkali metal oxide presents a strong alkaline property when it reacts with water and changes to a hydroxide. Accordingly, it is preferable to add to the refine additive at least one selected from the group consisting of carbonate, hydrogen carbonate, and silicate of alkali metal. For example, by adding lithium carbonate, lithium hydrogen carbonate or lithium silicate and heating, an effect similar to that achieved by adding lithium oxide to silicon oxide can be obtained. By adding sodium carbonate, sodium hydrogen carbonate or sodium silicate to silicon oxide and heating, an effect similar to that achieved by adding sodium oxide to silicon oxide can be obtained. Thus, preferably the refine additive contains acidic oxide as a main component. Here, the main component refers to a component contained by at least 50 mass %, preferably at least 60 mass %.

To the refine additive used in the present invention, for example, aluminum oxide, magnesium oxide, barium oxide, or calcium fluoride which are generally employed in the field such as smelting of steel, may be added as appropriate.

Next, an embodiment of the present invention will be described taking a method of removing boron from molten silicon as an example. Since the effect of the present invention is attained by oxidation reaction, the impurity element to be removed is not limited to boron, and a representative impurity element to be removed by oxidation reaction may be carbon, for example.

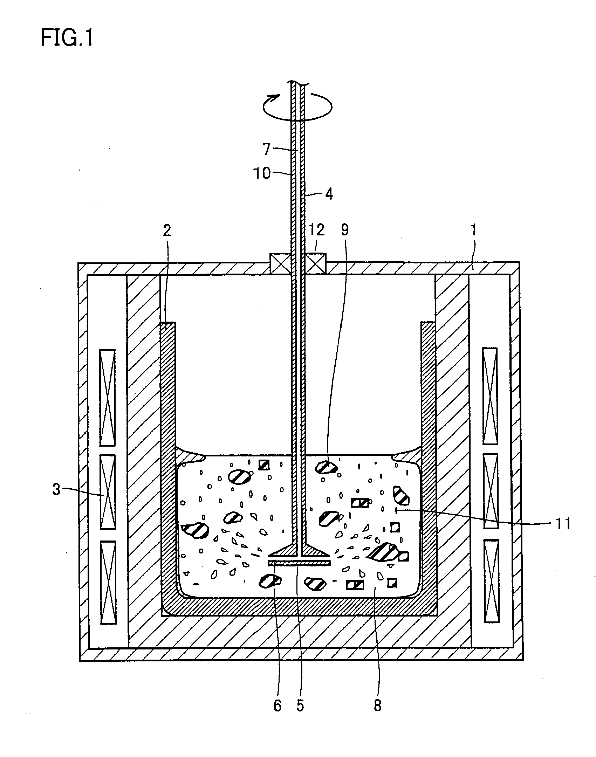

Fig. 1 shows a preferred example of an apparatus used in carrying out the refining method of the present invention. As shown in Fig. 1, the apparatus includes a smelting furnace 1 having a wall made of stainless steel, a crucible 2 made of graphite into which molten silicon 8 is poured, an electromagnetic induction heating apparatus 3, and a gas blow-in tube 4 made of graphite. With molten silicon 8, molten slag 9 is blended as necessary.

Gas blow-in tube 4 includes a stirring portion 5 and a gas blow-out port 6 at its lower portion. At the upper portion of gas blow-in tube 4, a rotary drive mechanism (not shown) for rotating stirring portion 5 in molten silicon 8 is provided. Further, an elevating and lowering mechanism (not shown) for immersing stirring portion 5 in molten silicon 8 or removing stirring portion 5 therefrom is provided at the upper portion of gas blow-in tube 4.

In gas blow-in tube 4 with stirring portion 5, a hollow gas flow channel 7 through which a refine gas passes is formed. At the portion where gas blow-in tube 4 penetrates through the wall of smelting furnace 1, a seal mechanism 12 for ensuring sealing of smelting furnace 1 and for allowing gas blow-in tube 4 to rotate is provided.

First, in crucible 2 of the apparatus, metal silicon (Metallurgical Grade Silicon) (hereinafter referred to as "MG-Si") of about 98% purity, and a refine additive if necessary, are placed. Crucible 2 is heated by electromagnetic induction heating apparatus 3, with the space in smelting furnace 1 being an inert gas atmosphere such as Ar. Through the heat transfer from crucible 2, the temperature of MG-Si and the refine additive is increased so that they are melted. The melt thus obtained is held at a prescribed process temperature, representatively at 1450°C-1600°C. The molten refine additive (hereinafter referred also to as "a molten slag") is separated from the molten silicon before the melt is stirred.

Next, by the elevating and lowering mechanism, gas blow-in tube 4 is lowered to immerse gas blow-in tube 4 and stirring portion 5 in molten silicon 8 in crucible 2. Subsequently, while blowing the refine gas from gas blow-out port 6 through hollow gas flow channel 7 in gas blow-in tube 4 into molten silicon 8, gas blow-in tube 4 is rotated by the rotary drive mechanism in the direction indicated by the arrow to stir molten silicon 8.

Thus, bubbles 11 of the refine gas blown into molten silicon 8 become fine and brought into contact with molten silicon 8 while being dispersed evenly in molten silicon 8. Then, throughout molten silicon 8, reaction between molten silicon 8 and the refine gas is facilitated, and oxide of the impurity element such as boron included in molten silicon 8 is produced. The oxide is removed from the molten silicon by vaporization or the like. Accordingly, with the present invention, since the refine gas is evenly dispersed in molten silicon 8 and the impurity can be removed substantially at once from the entire molten silicon 8, silicon can efficiently be refined.

On the other hand, when a refine additive is used, bubbles 11 of the refine gas blown into molten silicon 8 and molten slag 9 are fined, and can evenly be dispersed in molten silicon 8. Then, throughout molten silicon 8, reaction among molten silicon 8, molten slag 9 and the refine gas is facilitated, and oxide of the impurity element such as boron included in molten silicon 8 is produced. The oxide may be removed from the molten silicon by vaporization or the like. Accordingly, with the present invention, since the refine gas is evenly dispersed in molten silicon 8 and the impurity can be removed substantially at once from the entire molten silicon 8, silicon can efficiently be refined.

Here, when a molten slag greater than MG-Si in specific gravity is used, it is preferable to lower stirring portion 5 near the interface between the upper layer, i.e., molten silicon layer and the lower layer, i.e., the molten slag layer, and thereafter rotate gas blow-in tube 4. In such a manner, bubbles 11 of the refine gas blown out from gas blow-out port 6 and molten slag 9 are dispersed evenly in molten silicon 8 more easily.

In a state where the refine gas, molten silicon 8 and the added molten slag 9 are very efficiently mixed in crucible 2 and the contact area between each phase is significantly increased, oxidation reaction of the impurity such as boron in molten silicon 8 is significantly facilitated by oxygen supplied by the oxidizing gas and molten slag 9 added as necessary in the refine gas.

By stirring molten silicon 8 so that molten slag 9 is more evenly dispersed therein, the function of molten slag 9 as an oxidant can efficiently be exploited. It should be noted that the refine additive may not necessary be molten in its entirety, and substantially the same effect can be attained if it is partially solid. On the other hand, in light of removal of the impurity, it is desirable to hold the silicon and the refine additive both in a molten state when refining silicon.

When no refine additive is added to MG-Si, or when a refine additive smaller than MG-Si in specific gravity is added, it is preferable to lower stirring portion 5 to lower portion of molten silicon 8 and thereafter rotate gas blow-in tube 4.

Preferably an introduction pressure of the refine gas is greater than 0.10 MPa, and more preferably it is in a range of 0.15 MPa-0.3 MPa. In this manner, even when molten slag 9 of high viscosity is mixed in molten silicon 8, blowing out of the refine gas can be continued stably.

It is desirable to form oxidation resistant material layer 10 such as alumina in an internal wall of gas flow channel 7. In this manner, the temperature of molten silicon 8 is maintained at about 1450°C-1600°C, and therefore part of gas blow-in tube 4 and stirring portion 5 in contact with molten silicon 8 are heated to substantially the same temperature as that of molten silicon 8. Through the heat transfer from molten silicon 8, gas blow-in tube 4 is heated to about 1500°C or higher at the portion near molten silicon 8. In such a high-temperature environment, if the oxidizing gas such as water vapor in the refine gas is brought into contact with a graphite member, the graphite member would easily be oxidized and eroded. In this regard, by forming oxidation resistant material layer 10 on the internal wall of gas flow channel 7, erosion of the graphite member can be suppressed.

Besides alumina, while silicon nitride, silicon carbide or the like can be employed as oxidation resistant material, alumina is particularly preferable in its excellence in strength under high temperature and resistance to the oxidizing gas and in its low costs. The method of forming the oxidation resistant material on the internal wall of gas flow channel 7 is not particularly limited. A tube of an oxidation resistant material may be inserted into the gas flow channel to cover the internal surface of gas blow-in tube 4; a paste of an oxidation resistant material may be applied inside gas flow channel 7; or a thin film of an oxidation resistant material may be formed by deposition, vapor phase epitaxy method or the like.

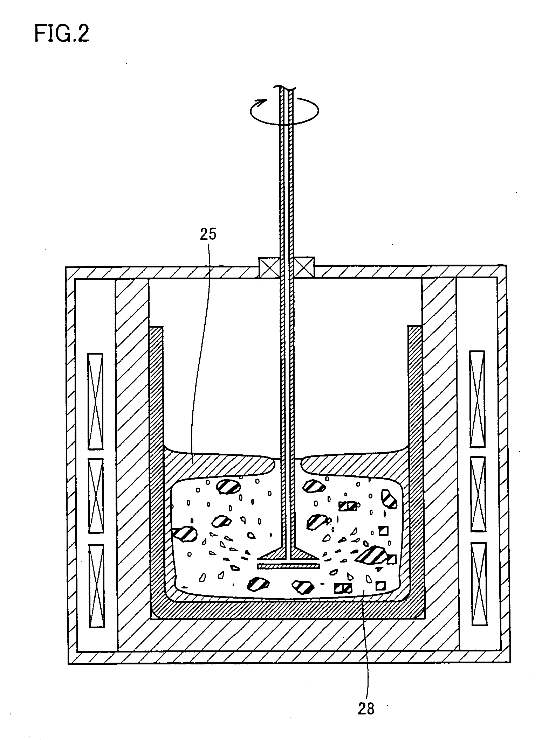

Next, removal of silica that is produced by reaction of the molten silicon and the refine gas will be described. Fig. 2 is an example of refining molten silicon using an apparatus similarly formed as the refining apparatus in Fig. 1. As shown in Fig. 2, blowing the refine gas containing an oxidizing gas into the molten silicon and continuing boron removal process, a slag 25 that absorbed silica produced by reaction of the molten silicon and the refine gas and that increased in viscosity partially covers the surface of molten silicon 28 like a lid. In such a state, slag 25 absorbed produced silica and increased in viscosity is hardly dispersed in the molten silicon, and boron removal rate is deteriorated.

In such a state, by stopping blowing of the refine gas into molten silicon 28, and blowing only a process gas of Ar or the like into molten silicon 28 to be in contact with slag 25 having absorbed the produced silica partially covering the melt surface and increased in viscosity, such viscosity can be lowered and the boron removal rate can be recovered. Additionally, when the refine additive used is lighter than silicon in specific gravity, for example in a case of a molten slag prepared as SiO₂:Li₂O = 80:20 (mass ratio), it mostly floats on the melt surface and adheres around the wall of the crucible. In such a case also, by blowing-in the process gas, the viscosity of the molten slag covering the melt surface can be lowered and the boron removal rate can be recovered.

Further developing the present invention, preferably the refine gas is blown-in for several times with the total blow-in time being the same, and the process gas is blown-in after each refine gas blowing process, so that the impurity such as boron can be removed more efficiently. Additionally, preferably hydrogen is added to the process gas so that the effect of lowering the viscosity of slag having absorbed the produced silica and increased in viscosity is improved. Further, also by a method including the step of bringing the refine gas into contact with the molten silicon, thereby removing a product containing the impurity element from the molten silicon, and simultaneously, bringing a process gas with the molten silicon, thereby removing a product generated by reaction of the molten silicon and the refine gas, the molten silicon can be refined efficiently without lowering the rate of removing boron or the like. Since the refining method of the present invention is simple and efficient in light of processes, an inexpensive silicon raw material for solar batteries can be provided.

### (Example 1)

In the present example, 1kg of MG-Si was placed in crucible 2 in Fig. 1. Then, silicon oxide powder, lithium silicate powder and calcium silicate powder were mixed and placed in crucible 2 by an amount corresponding to 20 mass % ofMG-Si. Silicon oxide powder, lithium silicate powder and calcium silicate powder were converted to be silicon oxide: lithium oxide: calcium oxide = 67:16:17 (mass ratio) and blended. Next, the inside of smelting furnace 1 was set to be Ar atmosphere of 0.10 MPa, and crucible 2 was heated using electromagnetic induction heating apparatus 3 thereby melting MG-Si, which was held at 1550°C. For measuring the boron content before processing, molten silicon 8 was extracted by about 20g, and 5g of which was used for measurement.

As the refine gas, a gas in which, relative to a carrier gas constituted of a mixture gas of Ar and hydrogen (the volume ratio of hydrogen being 4%), water vapor was blended by 60 volume % was used. The refine gas was introduced into gas blow-in tube 4 at a flow velocity of 14L/min. By the elevating and lowering mechanism, gas blow-in tube 4 was lowered, so that stirring portion 5 is placed in the lower portion of molten silicon 8. While the refine gas was blown from gas blow-out port 6 of stirring portion 5 into molten silicon 8, gas blow-in tube 4 was rotated by the rotary mechanism at 400rpm, to perform the refining process for 40 minutes.

Thereafter, blending of the water vapor with the refine gas was stopped, and a mixture gas of Ar and hydrogen (the volume ratio of hydrogen being 10%) as the process gas was blown from stirring portion 5 into molten silicon 8 at a flow velocity of 10L/min for 20 minutes. Here, the atmosphere gas flow rate to smelting furnace 1 was adjusted as appropriate, so that the concentration of hydrogen in smelting furnace 1 is lower than the lower limit of explosive limits (4 volume % - 75 volume %). After conducting the process gas blow-in process for 20 minutes, molten silicon 8 was extracted by about 20g, and 5g of which was used for measuring boron concentration. The foregoing operations constitute one cycle. The cycle was repeated for three times. Therefore, the total blow-in time of refine gas was 120 minutes, and the total process gas blow-in time was 60 minutes. The result of measuring boron content before refine gas blow-in, after refine gas blow-in for cumulative 40 minutes, 80 minutes, and 120 minutes is shown in Fig. 3. As a result, the boron concentration was continuously lowered as the refine gas blow-in time was longer, and boron removal was achieved without lowering the boron removal rate during the refine process.

### (Second Example)

The refine process was carried out similarly to the first example, except that the process gas containing only Ar was employed for the purpose of clarifying the effect of hydrogen in the process gas. The result is shown in Fig. 3. As shown in Fig. 3, in the present example where hydrogen is not added to the process gas, boron removal was carried out efficiently without lowering boron removal rate, although the boron concentration was slightly higher as compared with the first example.

### (Third Example)

In the present example, the refine process was carried out similarly to the first example, except that the composition of the refine additive was changed. As the refine additive, silicon oxide powder and lithium silicate powder were converted to be silicon oxide: lithium oxide = 80:20 (mass ratio) and blended. The result is shown in Fig. 3. As shown in Fig. 3, the boron concentration was slightly higher as compared with the first example. The reason was assumed as follows. Since the refine additive of silicon oxide: lithium oxide = 80:20 (present example) was lighter in specific gravity than the refine additive of silicon oxide: lithium oxide: calcium oxide = 67:16:17 (the first example), the molten slag tended to float over the melt surface and the vaporizing removal rate of the boron oxide was lowered as compared with the first example. However, by performing the process gas blow-in process, boron removal was efficiently achieved without lowering the boron removal rate.

### (Fourth Example)

In the present example, the refine process was carried out similarly to the first example, except that the composition of the refine additive was changed. As the refine additive, silicon oxide powder and calcium silicate powder were converted to be silicon oxide: calcium oxide = 45:55 (mass ratio) and blended. The result is shown in Fig. 3. As shown in Fig. 3, the boron concentration was considerably higher with the refine additive in which the main component was calcium oxide (present example), as compared with the first to third examples. However, by performing the process gas blow-in process, boron removal was efficiently achieved without lowering the boron removal rate.

Based on the comparison of the present example and the first to third examples, it was found that the refine additive containing greater silicon oxide component, i.e., an acidic oxide, as used in the first to third examples, could more effectively remove boron. In the present example, the initial boron concentration before the refine gas blow-in process is lower than the other examples. The reason was assumed as follows. Since the refine additive of the present example was highly basic (alkaline), the boron oxide of high acidity was absorbed and dispersed in the molten slag.

### (Fifth Example)

In the present example, the refine process was carried out similarly to the first example, except that no refine additive was used. The result is shown in Fig. 3. In the present example where no additive was used, while the produced silica on the silicon melt surface was small in the amount, it was observed to form a very thin coating film covering the melt surface. Additionally, as shown in Fig. 3, in the present example where no additive was used, the boron concentration was higher as compared with the first to fourth examples. However, by performing the process gas blow-in process, the coating film-like produced silica was removed, and boron removal was efficiently achieved without lowering the boron removal rate.

### (Comparative Example)

In the present comparative example, the refine process was carried out similarly to the first example, except that no process gas was blown in. The result is shown in Fig. 3. As shown in Fig. 3, it was found that the boron concentration of the present comparative example was higher as compared with the first to fourth examples, with the boron removal rate being gradually lowered as the refine gas blow-in time was accumulated.

It should be understood that the embodiments disclosed herein are illustrative and non-restrictive in every respect. The scope of the present invention is defined by the terms of the claims, rather than the description above, and is intended to include any changes within the meaning and scope equivalent to the terms of the claims.

### Industrial Applicability

According to the present invention, an impurity can efficiently be removed from molten silicon, and an inexpensive silicon raw material for solar batteries can be provided.

## Claims

1. A method for refining molten silicon (8) containing an impurity element, comprising the steps of:
bringing a refine gas containing a component that reacts with said impurity element into contact with said molten silicon (8), thereby removing a product containing said impurity element from said molten silicon (8); and
bringing a process gas, having small reactivity with said molten silicon (8), with said molten silicon (8), thereby removing a product generated by reaction of said molten silicon (8) and said refine gas.

2. The method for refining silicon according to claim 1, wherein
said refine gas includes an oxidizing gas.

3. The method for refining silicon according to claim 1, wherein
said process gas includes an inert gas.

4. The method for refining silicon according to claim 1, wherein
said process gas includes a reducing gas.

5. The method for refining silicon according to claim 1, wherein
to said molten silicon, a refine additive containing an acidic oxide as a main component is added.

6. A method for refining molten silicon (8) containing an impurity element,
comprising the step of:
bringing a refine gas containing a component that reacts with said impurity element into contact with said molten silicon (8), thereby removing a product containing said impurity element from said molten silicon (8); and simultaneously,
bringing a process gas, having small reactivity with said molten silicon (8), with said molten silicon (8), thereby removing a product generated by reaction of said molten silicon (8) and said refine gas.

7. The method for refining silicon according to claim 6, wherein
said refine gas includes an oxidizing gas.

8. The method for refining silicon according to claim 6, wherein
said process gas includes an inert gas.

9. The method for refining silicon according to claim 6, wherein
said process gas includes a reducing gas.

10. The method for refining silicon according to claim 6, wherein
to said molten silicon, a refine additive containing an acidic oxide as a main component is added.

11. Silicon refined by the method according to claim 1.

12. Silicon refined by the method according to claim 6.
